Europäisches Patentamt

(19) European Patent Office

Office européen des brevets

(11) Publication number: **0 176 117**
**B1**

(12) **EUROPEAN PATENT SPECIFICATION**

(45) Date of publication of patent specification: **30.01.91**

(21) Application number: **85201230.1**

(22) Date of filing: **19.11.82**

(60) Publication number of the earlier application in accordance with Art. 76 EPC: **0 080 239**

(51) Int. Cl.⁵: **A 01 C 17/00**

(54) **Device for spreading granular and/or powdery material.**

(30) Priority: **23.11.81 NL 8105285**

(43) Date of publication of application:
**02.04.86 Bulletin 86/14**

(45) Publication of the grant of the patent:
**30.01.91 Bulletin 91/05**

(84) Designated Contracting States:
**DE FR GB**

(56) References cited:
**WO-A-83/00978**
**BE-A- 555 066**
**FR-A-2 162 292**
**FR-A-2 410 427**
**NL-A-6 702 499**
**US-A-2 489 171**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

## Description

This invention relates to a device and a method for spreading granular and/or powdery material. The device comprises a hopper, at least one distribution member which is rotatable about a centreline, said distribution member being disposed below the hopper in the lower end of which is provided at least one outlet port having an inner edge and an opposite outer edge, whereby the inner edge and the opposite outer edge are located at the same side from the centreline of the lower end of the hopper and the opposite outer edge is located further from the centreline than the inner edge.

A device of the above mentioned kind is known from the FR—A—2 162 292. In one embodiment described in this application the outlet ports are provided in the bottom of a cylindrical lower end of the hopper and in another embodiment there are provided outlet ports in the walls of a conical lower end of the hopper. According to these known construction sometimes the material will now flow sufficiently fluently out of the hopper.

An object of the invention is to improve the flow of the material out of the hopper through the outlet port.

According to the invention this can be achieved when the part of the outlet port extending from the inner edge is provided in a bottom of the lower end of the hopper and the part of the outlet port that extends up to the opposite outer edge is provided in an upwardly exteding wall portion of the lower end of the hopper.

Owing to this construction the material can flow easily and quickly through the outlet port. Hereby large quantities of material per unit of time can flow out of the hopper to be able to spread large quantities of material per square and/or time unit and/or to spread the material over wide strips during travelling with the spreader.

In an advantageous embodiment of the device according to the invention the wall portion having the opposite outer edge is widening upwardly such that this wall is extending at an angle to the centreline of the lower end of the outlet port of the hopper.

A simple construction of the device according to the invention may be obtained when the wall portion is circular in cross-section perpendicular to the centreline.

According to a further embodiment of a device according to the invention, the lower end of the hopper has two outlet ports located above the distribution member and near the outlet ports there is a closing member by which, at will, one of the two outlet ports can be maintained in the working state for passing a larger or smaller flow of material from the hopper to the distribution member and in that the closing member is coupled with an adjusting member and can be fixed at will in either of at least two positions with respect to the adjustment member of the dosing slide. In this manner the feed of material to the distribution member can be changed in a manner such that the width covered by the distribution members is adjustable.

In an advantageous embodiment of the device accordig to the invention the material is spread by at least two distribution members which spread the material on the same sector as each other whereas the speed of rotation of the distribution members is variable.

For a better understanding of the present invention and to show how it may be carried into effect, reference will now be made, by way of example, to the accompanying drawings, in which:

Figure 1 is a front view of a spreader;

Figure 2 is a side view of the spreader of Figure 1 taken in the direction of the arrow II in Figure 1;

Figure 3 is a plan view of the spreader shown in Figures 1 and 2;

Figure 4 is an enlarged, vertical sectional view of part of the spreader shown taken on the line IV—IV insfigure 3;

Figure 5 is a plan view showing the distribution members of the spreader;

Figure 6 is a plan view of drive means for the distribution members;

Figure 7 is a vertical sectional view corresponding to Figure 4 but on a larger scale;

Figure 8 is an enlarged side elevation of an adjusting mechanism for dosing members of the spreader;

Figure 9 is a front view showing the dosing members;

Figure 10 is a plan view of the delivery compartments of the hopper;

Figure 11 is a plan view of dosing plates adjacent the delivery compartments;

Figure 12 is a plan view of closing members arranged beneath the dosing plates;

Figure 13 is a plan view of one relative position of the dosing plates and the closing members;

Figure 14 schematically illustrates the distribution pattern of the distribution members at one speed of rotation;

Figure 15 schematically illustrates the distribution pattern at a different speed of rotation;

Figure 16 illustrates the distribution pattern when one outlet port is blocked, at one speed of rotation; and

Figure 17 illustrates a distribution pattern in a position of the outlet ports corresponding to that of Figure 16 at another speed of rotation.

The spreader illustrated in the Figures comprises a frame 1, on which a hopper 2 having two delivery spouts 3 and 4 is arranged. The frame 1 is furthermore provided with two distribution members 5 and 6 beneath the delivery spouts 3 and 4. The centrelines 7 and 8 of the delivery sputs 3 and 4 coincide respectively with the centrelines of the distribution members 5 and 6. The upwardly extending centrelines 7 and 8 of the delivery spouts 3 and 4 lie, in normal use of the spreader, in a vertical plane 9 extending transversely of a vertical plane 10 which contains the longitudinal centreline of the spreader and extends in the normal direction 11 of operative travel of the spreader. The frame 1 and the hopper 2 are symmetrical about the plane 10.

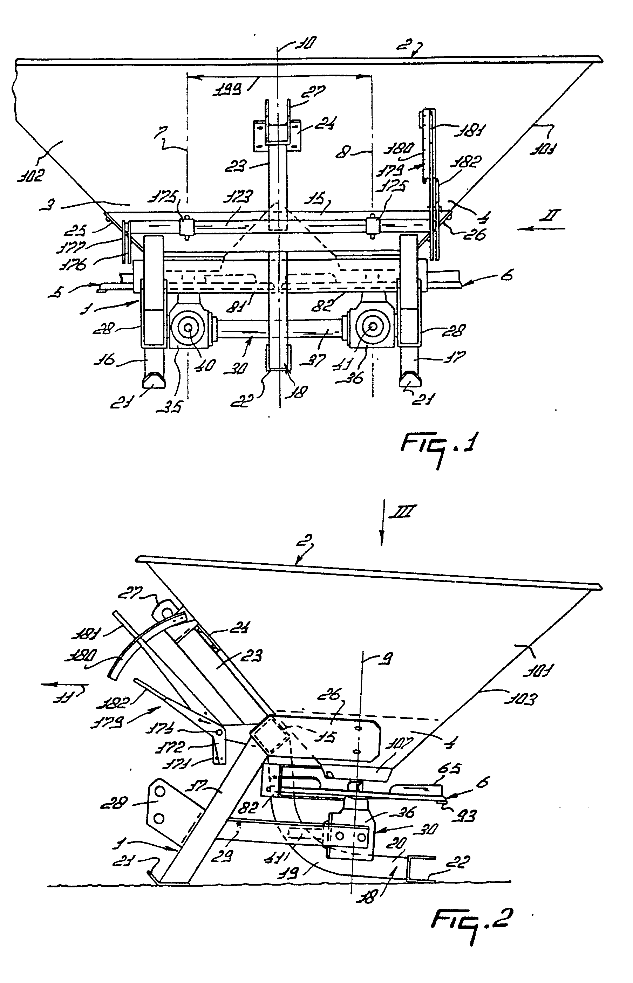

The frame 1 comprises a horizontal main frame beam 15 located at the front of the hopper 2 at the level of the delivery spouts 3 and 4. Near its ends the beam 15 is provided with end supporting beams 16 and 17, which slope downwardly and forwardly from the beam 15. A central supporting beam 18 is fastened to the beam 15. The beam 18 extends away from the beam 15 initially in a downwards and slightly rearward direction and is then curved at 19 to terminate in a part 20 which extends substantially horizontally to the rear. The beam 15 is a square-section, hollow beam, the sides of which are at about 45° to the horizontal as is apparent from Figure 2. The beams 16, 17 and 18 are hollow, angle-section supporting beams. The beams may, as an alternative, be hollow, circular beams. The beams 16 and 17 are provided at their lower ends with feet 21, and the beam 18 is provided at the rear with a U-shaped supporting foot 22, the limbs of which are horizontal and have an opening (not shown) for enabling further equipment to be attached to the spreader.

The frame 1 also comprises a fastening beam 23 which is connected to the main frame beam 15 and slopes upwardly and forwardly from it. The beam 23 is provided with a supporting plate 24, which is connected to the front wall of the hopper 2. Supporting plates 25 and 26 are provided at the ends of the beam 15 and extend parallel to, and are secured to, the sidewalls of the hopper 2.

The end of the beam 23 is provided with a U-shaped coupling member 27, which can be coupled with the upper lifting arm of a three-point lifting device of a tractor or a similar vehicle. The beams 16 and 17 are provided with U-shaped coupling strips 28, which can be coupled with the lower arms of the lifting device.

The supporting beams 16 and 17 are provided with carrying beams 29 extending parallel to each other and to the strips 25 and 26. The rear ends of the beams 29 are interconnected by a carrier 30, which is supported by the beams 29. The strips 25 and 26 and the carrying beams 29 extend horizontally in the normal upright operative position of the spreader. The distribution members 5 and 6 are arranged on the carrier 30 so as to be rotatable about the centrelines 7 and 8. The carrier 30 comprises two gear boxes 35 and 36, which are coupled with one another by a hollow beam 37. In the gear boxes 35 and 36 are journalled upwardly extending shafts 38 and 39, to which the distribution members 5 and 6 are fastened. The gear boxes 35 and 36 are also provided with input shafts 40 and 41 respectively. The input shaft 40 is provided with a gear wheel 42 which is disposed in the gear box 35 and co-operates with a gear wheel 43 on the shaft 38. The gear box 35 also contains a gear wheel 44 which co-operates with the gear wheel 42 and is fastened to a shaft 45 journalled in the gear box 35. The shaft 45 extends through the hollow beam 37 and its other end is journalled in the gear box 36. In the gear box 36 there is a gear wheel 46 which is fastened to the input shaft 41 and meshes with a gear wheel 47 on the shaft 39. The shaft 45 is provided with a gear wheel 48 which is provided in the box 36 and is coupled with the gear wheel 46. The gear wheels 43 and 47 are identical to each other, as are the gear wheels 44 and 48. The gear wheel 42 has fewer teeth than the gear wheel 46. The gear wheel 47 is located in front of the shaft 38 and the gear wheel 46 is located behind the shaft 39.

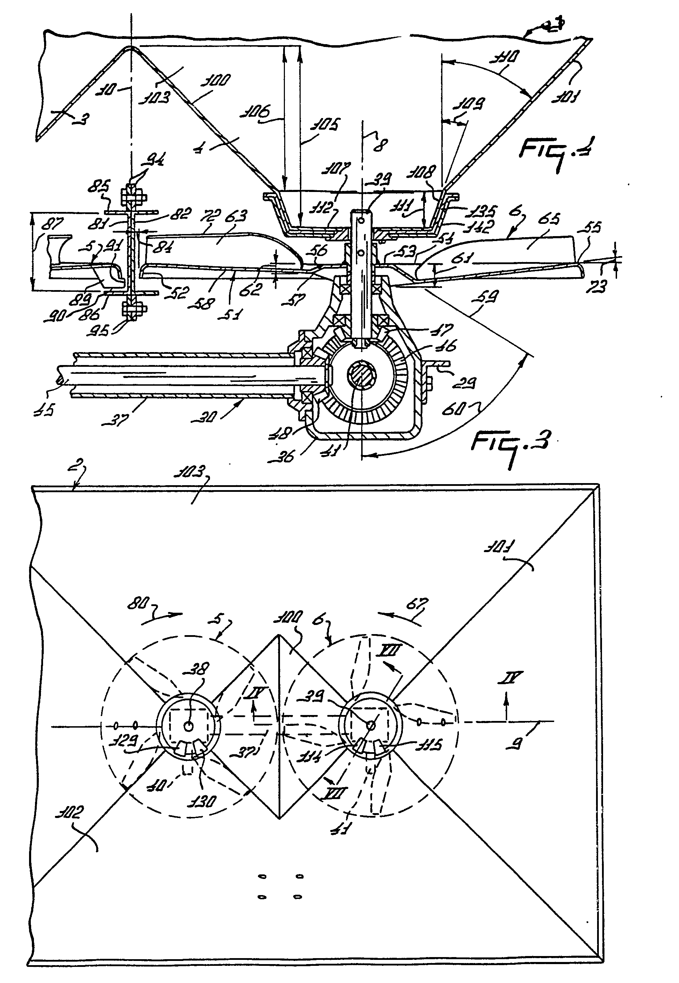

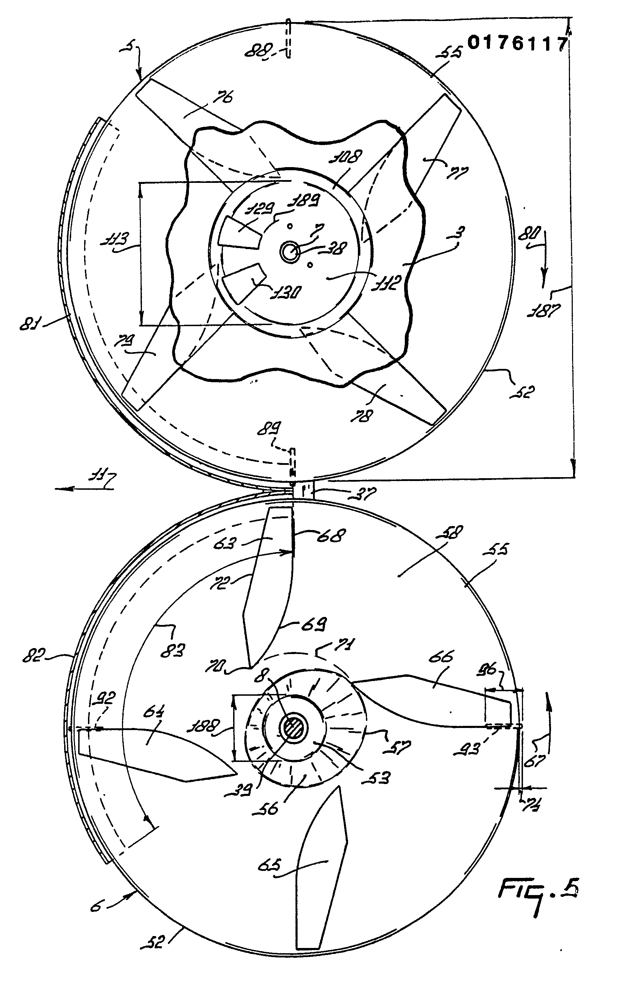

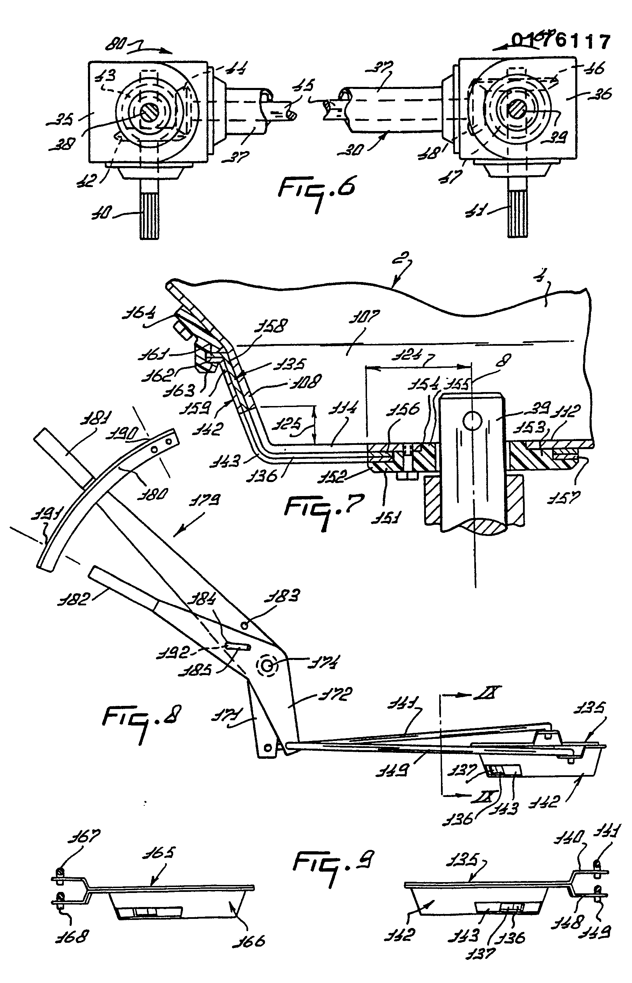

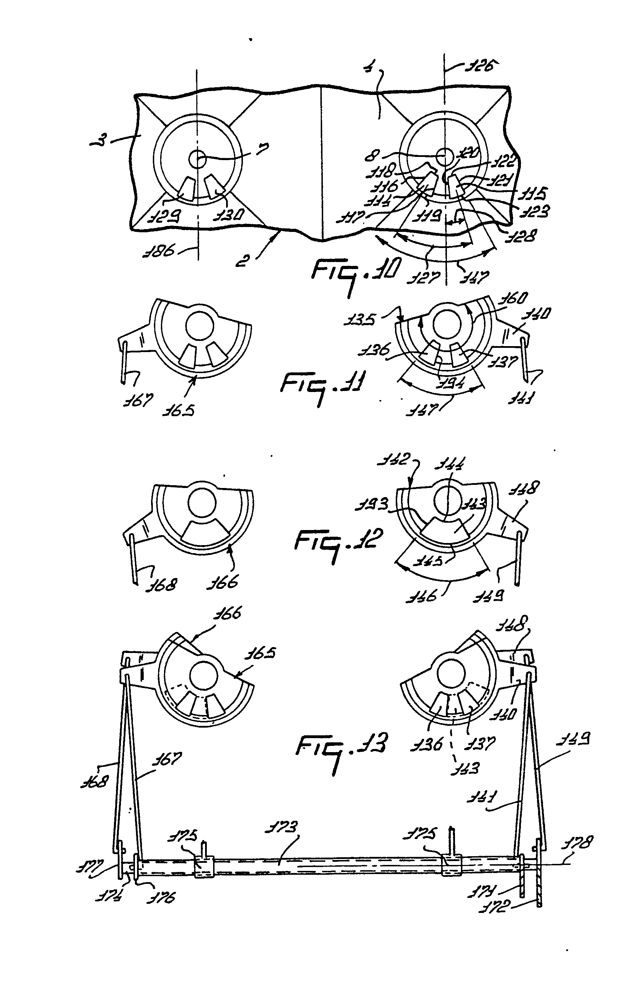

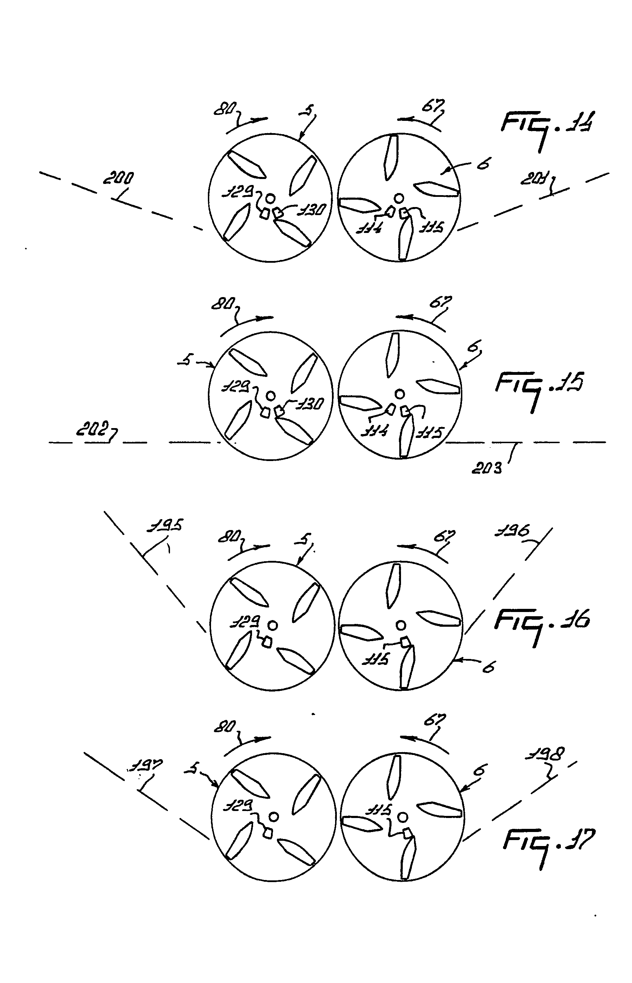

The distribution members 5 and 6 arranged on the shafts 38 and 39 are substantially identical and are disposed symmetrically, although they are not symmetrical with respect to the plane 10 as will be apparent from Figures 4 and 5. The design of the distribution members will be described in detail with reference to the distribution member 6.

The distribution member 6 comprises a round plate 51 on which are mounted four ejection members in the form of blades 63 to 66. The plate 51 has a downwardly bent-over rim 52 at its periphery. The rim 52 is substantially parallel to the shaft 8. In the middle the plate 51 has an elevated central part 53, the top surface of which is located in a plane 54 passing through the uppermost extremity 55 of the outer part of the plate 51. The plane 54 is at right angles to the centerline 8. The central part 53 is circular and centred on the centreline 8. Away from the circumference of the central part 53 the plate 51 has a downwardly inclined surface 56 which adjoins, through a curve 57, a part 58 which slopes upwardly away from the centreline 8 to the extremity 55. As will be particularly apparent from Figure 5, the inclined surface 56 extends further from the centreline 8 on one side than on the other side. The inclined surface 56 is at an angle of about 60° to the centreline 8. The bottom of the inclined surface 56 is represented by the curve 57 which is asymmetrical with respect to the centreline 8 and at the point furthest remote from the centreline 8, which is near the ejection member 66, it has its largest distance 61 from the plane 54. The distance 61 is more than twice the distance 62 between the plane 54 and the point of the curve 57 nearest the centreline 8. The point of the curve nearest the centreline 8 is located at the ejection member 63. The four ejection blades 63 to 66 are arranged on the upwardly sloping part 58 at equal intervals around the centreline 8. Owing to the difference between the distances 61 and 62 and to the position of the extremity 55 in the plane 54, the angle between the plane of the part 58 and the plane 54 will constantly vary around the centreline 8. The plane 58 has a position relative to the plane 54 such that the ejection blades 63 to 66 are, by their undersides lying in the plane 58, at angles 73 of 2°, 4°, 6°, and 8° respectively to the plane 54. With respect to the direction of rotation 67 of the distribution member 6, the angles invariably increase by the same value from one blade to the next, up to the blade 66, the blade 63 being the flattest.

In this embodiment the angle of inclination of each consecutive blade increases by increments of 2°. Viewed on plan (Figure 5) the ejection blades 63 to 66 are identical. The trailing sides of the ejection blades with respect to the direction of rotation 67 extend radially of the centreline 8 at the regions 68 furthest from the centreline 8. The regions 69 of the trailing of sides of the ejection blades nearer the centreline 8 are curved to the front with respect to the direction of rotation 67 and the innermost ends 70 nearest the centreline 8 are located on the same imaginary circle 71 centred on the centreline 8. The trailing sides of the ejection blades are located fairly closely above the upwardly inclined part 58, as will be apparent from Figure 4. In a sectional view the wall of the blades is curved away from the trailing side to the front up to the upper and leading edge 72.

The distribution member 5 comprises four ejection blades 76 to 79, which correspond to the ejection blades 63 to 66 of the distribution member 6. The direction of rotation of the distribution member 5 in normal operation is indicated by the arrow 80 and is opposite to the direction of rotation 67 of the distribution member 6. In the distribution member 5, as in the distribution member 6, the ejection blades are each at a different angle to the plane perpendicular to the centreline 7 of the distribution member 5. The ejection blades 76 to 79 are likewise at acute angles of 2°, 4°, 6° and 8° respectively to a plane at right angles to the centreline 7. The centrelines 7 and 8 are parallel to one another and the top surface of the elevated central part and the circumferential edge of the distribution member 5 are located in the same plane 54 as the part 53 and the extremity 55 of the distribution member 6. In particular from Figure 5, it will be apparent that the distribution member 5 is positioned relatively to the distribution member 6 so that the ejection blades 76 to 79 are turned through 45° with respect to the ejection blades of the distribution member 6.

Around the distribution members 5 and 6 are arranged shield plates 81 and 82. The plates 81 and 82, as will be seen from Figure 5, are arcuate and centred respectively on the centrelines 7 and 8. They are spaced apart by a distance 84 of only a few millimetres from the peripheral rim 52 of the distribution members. The plates 81 and 82 are in contact with one another and are connected to each other at a position near the plane 9 and between the distribution members 5 and 6. The plates 81 and 82 subtend angles 83 of about 125° at the centrelines 7 and 8 respectively away from the plane 9. From their contact point between the distribution members the plates 81 and 82 extend, in the direction of the senses of rotation 80 and 67 of the distribution members. The plates 81 and 82 are located in front of the plane 9, with respect to the travel direction 11. Each of the plates 81 and 82, as is shown for the plate 81 in Figure 4, has horizontal flanges 85 and 86 which are parallel to each other at right angles to a web of the plate, so that each plate has a U-shaped or channel-shaped cross-section. The flanges 85 and 86 are spaced apart by a distance 87, within which lies the whole height of the distribution members in a manner such that the flange 85 is located in a plane largely above the distribution member, and the flange 86 lies in a plane below the distribution member.

The distribution member 5 is provided with two auxiliary blades 88 and 89 which are offset from each other by 180° around the centreline 7. The blades 88 and 89 are arranged on the underside of the ejection plate 51, at its periphery. The lower edge 90 of each blade 88 and 89 passes a short distance, of the order of one millimetre, above the flange 86, as is shown for the blade 89 in Figure 5. The outer edge 91 of each auxiliary blade 88 and 89 is a distance 74 of 2 mm beyond the downwardly bent-over peripheral rim 52 of the distribution member and is spaced apart from the plate 81 by a distance of the order of one millimetre as is shown for the blade 89 in Figure 4. The distribution member 6 is provided with blades 92 and 93 corresponding with the blades 88 and 89. The blades 92 and 93 are 90° offset, relatively to the blades 88 and 89, as will be apparent from Figure 5. The auxiliary blades have a length 96, which is small compared with the diameter 187 of the distribution members. In this embodiment the length 96 is less than one tenth of the diameter 187. The shield plates 81 and 82 are provided in a manner not shown in detail with strips 94, 95, which are secured to the frame and by which the plates are connected to each other.

The delivery spouts 3 and 4 are identical and Figures 4 and 7 show further details of the delivery spout 4. The delivery spouts are symmetrical about the plane 10. The delivery spout 4 has a quadrangular horizontal sectional shape and has two sides 100 and 101 lying in planes which are parallel to the direction 11. The side 101 is a sidewall of the hopper 2. The side 100 has a height 106, by which dimension the delivery spout 4 is separated from the delivery spout 3 as will be particularly apparent from Figures 1 and 4. The delivery spout 4 has furthermore walls 102 to 103, which coincide with the front and rear walls of the hopper 2. The walls 100 to 103 are all at 45° to the horizontal, when the spreader is positioned with the centrelines 7 and 8 vertical. The separated delivery spouts 3 and 4 are extending over a height 105 and the rectangular-section part of the delivery spout covers a height 106, which is smaller than the height 105. The lower end 107 of the delivery spout has a circular section. The lower end 107 is parallel to a conical surface whose axis is the centreline 8. The conical surface widens upwardly in a manner such that the wall 108 of the lower end 107 is at an angle 109 of about 20° to the centreline 8. The height 111 of the lower end 107 is approximately equal to one fifth of the height 105 of the delivery spout.

The lower end 107 has a bottom 112 at right angles to the centreline 8. The diameter 113 of the bottom 112, as will be apparent from Figure 5 for the lower end of the delivery spout 3, is only slightly smaller than the diameter 71 of the imaginary circle on which the inner ends of the ejection blades of the distribution member are located. The lower end 107 has two outlet ports 114 and 115 (Figure 10), which are identical to each other. In the illustrated embodiment, the port 114 has two opposite edges 116 and 117, which extend radially of tne centreline 8, and two further opposite edges 118 and 119, which are curved and centred on the centreline 8. The port 115 has, in a similar manner, radial edges 120 and 121 and curved edges 122 and 123. The distance 124 between each inner edge 118 and 122 and the centreline 8 is about half the radius of the bottom 112, i.e. about one quarter of the diameter 113. From the inner edges 118 and 122 the ports extend in to a portion of the wall 108 (Figure 7). The outlet ports extend to a height 125 above the bottom 112 in the wall 108, the distance 125 being about one third of the height 111 of the lower end 107. The ports 114 and 115 are located in front of the plane 9 with respect to the direction 111. The outlet ports 114 and 115 are on opposite sides of the plane 126 containing the centreline 8 and extending in the direction 11. The outlet port 114 is located on the inboard side of the plane 126, i.e. that side which faces the delivery spout 3, and the outlet port 115 is located on the outboard side of the plane 126. The radial centrelines of the ports 114 and 115 subtend an angle 127 of about 50° at the centreline 8. The radial centreline of the port 115 is offset by an angle 128, which is about 20°, from the centre of the plane 126 and the radial edge 120 is located very near the plane 126. In a similar manner as described for the delivery spout 4 the delivery spout 3 has two outlet ports 129 and 130, which are disposed symmetrically with respect to the ports 114 and 115 about the plane 10. On the outside of the lower end 7 there is a dosing slide 135, which fits rotatably on the lower end 107. The dosing slide 135 has two openings 136 and 137, which are identical to the outlet ports 114 and 115 and arranged in the same manner around the centreline 8. Like the outlet ports 114 and 115, the openings 136 and 137 extend, as is apparent from Figure 7, into the upwardly extending wall of the dish-shaped dosing slide 135. At its top edge the dosing slide 135 is provided with a tag 140, with which an adjusting rod 141 is pivotally coupled. On the outside of the dosing slide 135 fits a closing member 142. The closing member 142 qjs a large passage 143, which is centred on the centreline 8 and has an inner side 144 and an outer side 145 which substantially coincide with the edges 118, 122 and 119, 123 respectively, as viewed along the centreline 8. At the centreline 8, the passage 143 subtends an angle 146 which is equal to the angle 147 subtended by the outlet ports 114, 115 and the openings 136, 137. At its upper edge the closing member 142 is provided with a tag 148, with which an adjusting rod 149 is pivotally connected.

A carrying ring 151, preferably made from synthetic resin, is fastened to the bottom 112. The carrying ring 151 has a bevelled edge 152 spaced from the bottom 112 and a spacing shoulder 153 which contacts the underside of the bottom 112. The carrying ring 151 is centred on the centreline 8 by a supporting spigot 155 which seats in a central opening 154 of the bottom 112. The dosing slide 135 and the closing member 142 have inner rings 156 and 157, which fit rotatably on the spacing shoulder 153. As will be apparent from Figures 11 and 12 the upwardly extending walls 158 and 159 of the dosing slide 135 and the closing member 142 only subtend an angle 160 of about 200° at the centreline 8. The upwardly extending walls 158 and 159 have flared flanges 161 and 162 respectively. These flanges are slidable in a groove 163 of a guide member 164 which is fastened to the delivery spout 4.

A dosing slide 165 and a closing member 166 are provided at the underside of the delivery spout 3 in the same manner as described for the dosing slide 135 and the closing member 142. The dosing slide 165 and the closing member 166 are identical to the dosing slide 135 and the closing member 142, but the two dosing slides 165 and 135 are arranged symmetrically with respect to one another about the plane 10. The closing members 142 and 166 are also identical and symmetrical with respect to one another about the plane 10. The dosing slide 165 is pivotally coupled with an adjusting rod 167 and the closing member with an adjusting rod 168, which rods are comparable with the adjusting rods 141 and 149 respectively.

The adjusting rods 141 and 149 are coupled with lever arms 171 and 172. The lever arms 171 and 172 are coupled respectively with a tube 173 and a shaft 174 which is rotatable in the tube. The tube 173 is rotatably journalled in bearings 175 on the frame beam 15. The tube 173 and the shaft 174 are parallel to and approximately at the same level as the frame beam 15, that is to say, in front of the beam 15 with respect to the direction 11. The arms 171 and 172 constitue adjusting levers and are located to one side of the hopper and are fastened to the ends of the tube 173 and the shaft 174 respectively. At their other ends, the tube and the shaft are provided with arms 176 and 177 constituting adjusting levers, which are pivotally coupled with the adjusting rods 167 and 168. The distances between the common centreline 178 of the tube 173 and the shaft 174 and the coupling points of the adjusting rods 167 and 168 on the adjusting levers 176 and 177 are the same as the distances between centreline 178 and the junctions of the adjusting rods 141 and 167 with the adjusting levers 171 and 172. The tube 173 and the shaft 174 together with the adjusting levers and adjusting rods connected therewith constitute an adjusting mechanism 179 having a guide member 180 arranged on the hopper. A handle 181 of the adjusting lever 171 can slide along the guide member 180 and be fixed at will in any one of a plurality of positions. The adjusting lever 172 comprises a handle 182, which is upwardly and forwardly inclined like the handle 181. The adjusting lever 171 has openings 183 and 192, into which a locking pin 185 can be inserted, this pin being located in an opening 184 in the adjusting lever 172. By means of said locking pin the adjusting levers can be fixed relatively to each other in either one of two different positions at will.

When the spreader is put into use, it is attached by means of the fastening members 27 and 28 to the three-point lifting device of a tractor or a similar vehicle. In normal use of the spreader the centrelines 7 and 8 will usually be vertical or perpendicular to the surface to be covered. Either one of the shafts 40 and 41 is coupled by means of an auxiliary shaft with the power take-off shaft of the tractor in order to drive the distribution members 5 and 6 in the rotary directions 80 and 67 respectively about their centrelines 7 and 8, which can thus be regarded as rotary axes. The material to be spread is loaded into the hopper 2, from which it can be fed during operation through the outlet ports in the delivery spouts 3 and 4 and through the passages of the dosing slides and the closing members to the distribution members. As mentioned above, the outlet ports 114 and 115 in the delivery spout 4 and the outlet ports 129 and 130 in the delivery spout 3 are positioned in front of the plane 9 and near the planes 126 and 186. This feature, in conjunction with the diameters 187 of the distribution members, the direction of rotation 67 and 80 and the attainable speeds of rotation of the distribution members governed by the transmission ratios in the gear boxes 35 and 36 results in the distribution members 5 and 6 each spreading the material to the rear with respect to the direction 11. In this embodiment the diameter 187 is about 485 mms and the distance 199 between the centreline 7 and 8 is about 500 mms. Each of the distribution members spreads the material over a width covering substantially equal distances on both sides of the vertical plane 10. Therefore, during operation both distribution members will spread the material on the same strip of soil.

The material emanating from the hopper will flow mainly through the parts of the outlet ports lying in the bottom 112. The outlet ports are substantially located entirely within the imaginary circle 71, on which are located the inner ends of the ejection members so that the material will reach the distribution member concerned within the circle 71. The central part 53 of the distribution members has a diameter 188, which is smaller than the diameter of the imaginary circle 189 on which are located the sides 118 and 122 of the outlet ports in the delivery spouts concerned. Therefore, the material flowing out of the outlet ports will mainly strike the inclined surfaces 56, which thus constitute receiving areas. Along these downwardly inclined surfaces directed towards the circumference of the distribution members the downward stream of material is guided towards the inner ends of the ejection blades on the distribution members.

The point of the curve 57 furthest from the centreline 8 is located on the circle 71. The material can readily flow to the forwardly curved parts 69 of the ejection blades so that it can be satisfactorily spread by the ejection blades.

The distribution members eject the material over a given distance depending on the kind of material and the speed of rotation of the distribution members. The angle about the respective centrelines 7 and 8, over which the material leaves the circumference of the distribution members, does not include the shield plates 81 and 82. The plates 81 and 82 only serve in this case to stop particles which are scattered beyond the adjusted intended direction of distribution.

The material is ejected with a slight upwards component by the ejection members owing to the upward slope in the radially outward direction of the plate part 58 and of the ejection members arranged thereon. In the embodiment shown the various ejection members are at different angles to the plane 54 as described earlier in this description. Thus the material will be thrown out by the four ejection members on each distribution member respectively at angles of 2°, 4°, 6° and 8° with respect to the plane 54 and to the surface to be covered. In this manner each ejection member will spread the material during one revolution in a sector-shaped layer with a fairly large vertical thickness. In this way the uniformity of distribution of the material over the strips to be covered during travel of the machine is improved. Moreover the risk of collision of material ejected by one distribution member with material ejected by the other distribution member is reduced or avoided.

It will be appreciated from Figure 5 that the ejection blades of one distribution member are offset by 45° from those of the other. Therefore, the ejection blades of the two distribution members will spread the material symmetrically with respect to the plane 10 not simultaneously but successively so that the material spread by one distribution member is less likely to collide with that spread by the other distribution member. The likelihood of collision of the materials spread by the two distribution members is further reduced by a maximum asymmetry of the slopes of the ejection blades of one distribution member with respect to the plane 10 as compared with the ejection blades of the other distribution member having the same angle of inclination. As is illustrated in Figure 5 the ejection member 63 having an angle of inclination of 2° will cross the plane 10 between the ejection blades 78 and 79 of the other distribution member, these blades 78 and 79 having angles of inclination of 6° and 8° respectively. Since the ejection blades will have just finished ejecting material at the instant when they cross the plane 10, it will be obvious that the upward inclination of the ejected material will be very different for consecutive ejection blades of the two distribution members 5 and 6, and so the risk of the material ejected by one member coming into contact with material from the other ejection member is practically nil. In this manner a uniform distribution of the material on the surface to be covered is further enhanced.

Although in this embodiment all of the ejection blades on each of the distribution members are individually positioned at a different angle of inclination, the ejection members may, as an alternative, be disposed at only two different angles. For example, two oppositely disposed ejection members may be at an angle of 2°, whereas the other two opposite ejection members may be at a different angle, for example 6°. The ejection blades of the neighbouring distribution member may be disposed in a similar manner. As a further alternative all of the ejection blades of one distribution member may be at different angles from all of the ejection blades of the other distribution member. For example, two oppositely disposed ejection blades of the distribution member 5 might be at an angle of 2° and the other ejection blades at an angle of 4°, whereas two oppositely disposed ejection blades of the other distribution member might be at 3° and the other two at 5° with respect to the plane at right angles to the centerlines. As a further alternative the blades of one distribution member might all be at the same ange to the plane at right angles to the centreline, for example, at an angle of 2°, whereas the ejection members of the other distribution member might all be disposed at an angle of 4° to the plane at right angles to the centreline. Instead of being provided with four ejection members each distribution member could have a different number of ejection members, for example, 3 or 6, which may be disposed at different angles of inclination as described above. In the illustrated embodiment all of the ejection blades of each distribution member has the same length and all of them are spaced apart from the centreline by the same distance. As an alternative, the ejection blades may have relatively different lengths and/or be at different distances from the rotary axis.

The spreader described and in particular the construction of the distribution members operates during operation to spread the material in different, upwardly inclined directions with respect to the surface to be covered by a distribution member.

Any material impinging on the shield plates 81 and 82 will move downwards along the vertical sides of the plates 81 and 82 respectively to the horizontal flanges 86 and 95. This material will be engaged by the auxiliary blades 88, 89, and 92, 93 respectively and be ejected near the downstream end of the plate, with respect to the direction of travel of the auxiliary blade concerned during rotation of the distribution members. The material striking the plates 81 and 82 and engaged by the auxiliary blades will thus be distributed to the side of the device. It is thus prevented from falling down in an undesirable manner in the middle of the strip of land to be covered.

Owing to the specific construction of the distribution members any scattering particles of the material spread by one of the distribution members moving towards the neighbouring distribution member can be captured by the latter and be spread in the desired manner.

During travel of the device in the direction 11 the material can be spcead on a broad strip when the material can flow through the two outlet ports in each delivery spout to the distribution member concerned. The material will flow through substantially the whole angle 147 of about 75° onto the distribution members so that the material will leave the circumference of the distribution member over a wide sector angle. The circumferential angle of the sector in which the material leaves the distribution member also depends on the speed of rotation of the distribution member. The transmission ratios of the gear wheels in the gear boxes 35 and 36 are chosen so that the distribution members can, at will, be driven with a speed of about 776 rev/min or 1008 rev/min. When the passages of the two outlet ports in each of the delivery spouts are fully or only partly opened, the material will be ejected over a width within the lines 200 and 201 of about 12 metres (Figure 14) at a speed of rotation of 776 rev/min, the diameter of the distribution member and the positions of the outlet ports being as described above. Simply by connecting the driving shaft from the tractor to the other input shaft 41, the speed of rotation of the distribution members can be raised to 1008 rev/min, the material then being spread over a width of about 16 metres within the lines 202 and 203 (Figure 15).

The respective dosing slides 135 and 165 have openings corresponding with the outlet ports in the delivery spouts. The closing members 145 and 166 can be coupled with the dosing slides in a manner such that the passage 143 fully registers with the angle 147 in which are located the openings 136 and 137 of the associated dosing slides. For coupling the closing member with the dosing slide the locking pin 185 is inserted into the holes 184 and 183. By this coupling the dosing slide and the closing member are locked relatively to each other in the desired positions. The amount of material allowed to flow per unit time through the outlet ports 114, 115 and 129, 130 respectively can be controlled by causing the openings 136 and 137 to register to a greater or lesser extent with the associated outlet ports. For this purpose the adjusting lever 171 can be moved along the guide member 180 and be fixed in the desired position. The adjusting lever 171 can be actuated by means of the handle 181. This handle 181 and hence the adjusting lever 171 can be fixed at will in any one of a plurality of positions relative to the guide member 180. The guide member is provided with a scale (not shown) extending, for example, from 0 to 10, the outlet ports being fully closed or fully opened at the extreme positions. When the outlet ports are completely closed, the openings 136 and 137 are located entirely out of register with the outlet ports 114 and 115, as viewed on plan. In this position the handle 181 may be located at point 191 of the scale. When the outlet ports are fully opened, i.e. when the openings 136 and 137 are fully in register with the outlet ports 114 and 115 the handle may be located at a scale reading of 10, which may be at point 190 of the guide member 180 in Figure 8. Between these extreme positions intermediate positions can be chosen to close the outlet ports to a greater or lesse extent.

It is also possible to keep the outlet ports 114 and 130 forming the two medium outlet ports of the four ports 114, 115, 129 and 130 of the hopper constantly in the closed position. The material can then flow out of the hopper only through the outlet ports 115 and 129. In order to obtain this position the closing members 145 and 166 are displaced with respect to the dosing slides 135 and 165. To this end the locking pin 185 is removed from the hole 183 and the adjusting lever 172 is turned relatively to the adjusting lever 171 until the pin 185 can be inserted into the hole 184 in the adjusting lever 172 and the hole 192 in the adjusting lever 191. This position is shown in Figure 8. In this position the passages 143 are entirely out of register with the openings 136 (see Figure 13). The opening 136 will then remain fully closed so that despite the coincidence of this opening with the outlet port 114 in the delivery spout no material can be delivered through the outlet port 114. In a corresponding manner the outlet port 130 in the delivery spout 3 remains constantly closed. In the position shown in Figure 13 the closing member is turned with respect to the dosing slide to an extent such that the edge 193 of the passage 143 is located to the side of the edge 194 of the opening 136. In the latter positions of the slides and closing members relative to one another the size of the passage of the outlet ports 129 and 115 can be chosen in the same manner as described above by displacing the handle 181 along the guide member 180. The registering openings 137 and passages 143 can then co-operate with the outlet ports 115 and 129 respectively. When the material can flow only through the outlet ports 129 and 115, it is fed through a smaller angle determined by the angle of the sector covered by the outlet ports 129 and 115 to the associated distribution member. Since the material reaches the distribution member over this smaller angle, the sector angle through which the material leaves the periphery of the distribution member will also be smaller. In this way the width of spread of the material can be reduced with respect to the width indicated in Figures 14 and 15. Figure 16 shows that the material will be spread within the lines 195 and 196 over a width of about 5 metres at a speed of 776 rev/min of the distribution members. With the speed of 1008 rev/min of the distribution members the material is spread between the lines 197 and 198 over a width of about 10 metres (Figure 17). It will be obvious that the transmission ratios of the gear wheels in the gear boxes 35 and 36 may be differently chosen to obtain different speeds of rotation of the distribution members.

Owing to the above-described adjustability of the outlet ports by means of the dosing slides and the closing members and to the adjustability of the speeds of rotation of the distribution members the spreader can be rapidly adjusted to spread the material over different widths. The amount of material can be readily regulated by means of the adjusting lever 171, which can be actuated from the tractor by means of the handle 181 directed towards the tractor seat. The displacement of the dosing slides 135 and 165 and of the closing members 142 and 166 relative to the hopper can be readily carried out since these parts are held in the carrying members 151 and 164 of synthetic resin. Since the slides and the closing members have a dish-shaped cross-section and cover only slightly more than 180° around the centrelines 7 and 8, with the exeption of the annular parts 156 and 157, a single guide member 164 approximately at the middle of the flanges 161 and 162 is sufficient.

The spreader can easily stand on the ground when it is unhitched from the tractor. The spreader can then rest on the feet 21 and 22. The central supporting beam 18 of the frame constitutes a satisfactory support for putting the machine on the ground without lying in the paths of the material to be spread. As viewed in side elevation (Figure 2), the foot 22 is at an ample distance from the feet 21 to provide stability. Particularly because the foot 22 is located relatively far behind the plane 9 and the feet 21 are spaced apart by a comparatively large distance and located relatively far in front of the plane 9, great stability is ensured when the machine is resting on the ground.

The construction of the frame of the device is simple and it can, therefore, be readily manufactured. The construction of the frame is furthermore such that satisfactory support is provided for the hopper and the distribution members. Moreover, the construction of the frame and the overall design of the spreader are such that the various component parts are readily accessible for cleaning purposes. The shape of the frame is such that material can be spread across that part of the circumference of the distribution members which is not covered by the shield plates 81 and 82 without impinging on frame parts.

Selection of the desired one of the two available speeds of rotation of the distribution members can be very simply made by connecting the auxiliary shaft of the power take-off shaft of the tractor to one or the other of the shafts 40 and 41. This choice of the speed of rotation can be readily carried out in a structurally firm manner. Particularly in agriculture this technique for changing the speed of rotation is advantageous because there is no need to exchange, remove or replace vulnerable components. Owing to the availability of two speeds of rotation, two different working widths can be readily obtained. Moreover, since one of the two openings in each of the dosing slides may be closed at will, the number of different working widths can be extended. Because of the complete overlap of the spreading sectors of the two distribution members an advantageous distribution pattern can be obtained. Separate adjustment of the distribution pattern is not needed with the result that the machine can be easily controlled by less skilled or experienced operators. With regard to construction and applicability the machine is eminently suitable for use in the agricultural industry for spreading fertilizer, seeds or similar material.

The flow of material from the hopper to the outlet ports will not give rise to practical problems owing to the position of the walls 100, 101, 102 and 103 at 45° to the horizontal, when the spreader is upright. Furthermore, because the lower ends of the delivery spouts are circular and at a larger angle of about 70° to the horizontal, a satisfactory stream towards the oulet ports is practically always ensured. It is an advantage that the height 111 of the lower end 107 is about 5 cms.

Owing to its position the handle 181 of the adjusting lever 171 can be readily actuated from the driver's seat of the tractor to which the device is hitched. The disposition of the adjusting levers 171 and 172 forming adjusting members can be chosen so that the adjusting lever 172 can also be actuated from the tractor. For this purpose the locking pin 185 may be controllable remotely; for example, it may be a spring-loaded locking pin.

The manufacture of the device is facilitated since the carrier 30 with the distribution members 5 and 6 can be assembled as a separate unit and be mounted as a single unit on the frame of the device.

Reference is made to the European Patent application 82201468.4, of which the present application is a divisional application.

**Claims**

1. A device for spreading granular and/or powdery material, comprising a hopper (2), at least one distribution member (5, 6) which is rotatable about a centreline (7, 8), said distribution member (5, 6) being disposed below the hopper (2) in the lower end (107) of which is provided at least one outlet port (114, 115) having an inner edge (118, 122) and an opposite outer edge (119, 123), whereby the inner edge (118, 122) and the opposite outer edge (119, 123) are located at the same side from the centreline (7, 8) of the lower end of the hopper and the opposite outer edge (119, 123) is located further from said centreline (7, 8) than the inner edge (118, 122), characterized in that the part of the outlet port extending from the inner edge (118, 122) is provided in a bottom (112) of the lower end of the hopper and the part of the outlet port that extends up to the opposite outer edge (119, 123) is provided in an upwardly extending wall portion (108) of the lower end of the hopper (2).

2. A device as claimed in claim 1, characterized in that the wall portion (108) having the opposite outer edge (119, 123) is widening upwardly such that this wall portion is extending at an angle to said centreline (7, 8).

3. A device as claimed in claim 1 or 2, characterized in that the wall portion (108) is circular in cross-section perpendicular to the centreline of the lower end of the hopper.

4. A device as claimed in any of the preceding claims, characterized in that on the outer side of the lower end (107) of the hopper (2) and near the outlet port (114, 115) there is provided a dosing slide (135) for closing the outlet port (114, 115) at will to a greater or lesser extent, and in that the dosing slide (135) is coupled with an adjusting member (181) which is movable along a guide member (180) and can be fixed at will in any one of a plurality of positions along the guide member.

5. A device as claimed in claim 4, characterized in that the lower end (107) of the hopper has two outlet ports (114, 115, 129, 130) located above the distribution member (5, 6) and that near the outlet ports there is a closing member (142) by which, at will, one of the two outlet ports (114, 115, 129, 130) can be maintained in the working state for passing a larger or smaller flow of material from the hopper (2) to the distribution member and in that the closing member (142) is coupled with an adjusting member (172) and can be fixed at will in einer of at least two positions with respect to the adjusting member (171) of the dosing slide (135).

6. A device as claimed in any one of the preceding claims, characterized in that the device comprises two distribution members (5, 6), each of which is located beneath a delivery spout (3, 4) of the hopper (2), which delivery spouts each have at least two outlet ports (129, 130, 114, 115), one of which may be closed at will whilst the other may be maintained in the working state for passing material to the distribution member.

7. A device as claimed in claim 6, characterized in that each delivery spout (3, 4) is adjoined by a respective dosing slide (135) by means of which the outlet ports (114, 115, 129, 130) can be blocked at will to a greater or lesser extent, and in that near each delivery spout (3, 4) is located a closing member (142) by which one of the outlet ports in each delivery spout (3, 4) can be closed, the adjusting members (171, 172) of the dosing slides (135) and the closing members (142) being coupled with one another.

8. A device as claimed in any of the preceding claims, characterized in that the dosing slide (135) and the closing member (142) are dish-shaped members covering and adjoining approximately half the circumference of the circular, cup-shaped lower end (107) of the hopper (2).

9. A device as claimed in claim 7 or 8, characterized in that the dosing slides (135) and closing members (142) are provided with tags (140, 148) which are connected by rods with lever arms (171, 172, 176, 177) of common tubes (173) and shafts (174) to which the adjusting member (171) and the adjusting member (172) are fastened.

10. A device as claimed in any one of the preceding claims, characterized in that the device is provided with fastening members (27, 28) by which it can be coupled with the lifting device of a tractor or a similar vehicle, and in that the device is provided with transmission means (40 to 48) for driving the or each distribution member (5, 6), which transmission means is connectable with the power take-off shaft of a tractor or a similar vehicle to which the device can be attached.

11. A method for spreading granular and/or powdery material with a device as claimed in any one of the preceding claims, characterized in that the material is spread by means of at least two distribution members (5 and 6) which spread the material on the same sector as each other and in that the speed of rotation of the distribution members (5, 6) is variable.

**Patentansprüche**

1. Vorrichtung zum Ausstreuen von körnigen und/oder pulvrigen Stoffen, mit einem Behälter (2) und mindestens einem Verteiler (5, 6), der um eine Mittelachse (7, 8) drehbar und unterhalb des Behälters (2) angeordnet ist, in dessen unterem Ende (107) mindestens eine Auslaßöffnung (114, 115) vorgesehen ist, die eine innere Kante (118, 122) und eine ihr gegenüberliegende äußere Kante (119, 123) aufweist, wobei sich die innere Kante (118, 122) und die gegenüberliegende äußere Kante (119, 123) auf derselben Seite der Mittelachse (7, 8) des unteren Behälterendes befinden und die gegenüberliegende äußere Kante (119, 123) von der Mittelachse (7, 8) weiter entfernt ist als die innere Kante (118, 122), dadurch gekennzeichnet, daß der Teil der Auslaßöffnung, der sich von der inneren Kante (118, 122) aus erstreckt, in einem Boden (112) des unteren Behälterendes vorgesehen ist und der Teil der Auslaßöffnung, der sich bis zu der gegenüberliegenden äußeren Kante (119, 123) erstreckt, in einem aufwärts gerichteten Wandteil (108) des unteren Endes des Behälters (2) vorgesehen ist.

2. Vorrichtung nach Anspruch 1, dadurch gekennzeichnet, daß der Wandteil (108), der die gegenüberliegende äußere Kante (119, 123) enthält, nach oben aufgeweitet ist, so daß dieser Wandteil in einem Winkel zu der Mittelachse (7, 8) ausgerichtet ist.

3. Vorrichtung nach Anspruch 1 oder 2, dadurch gekennzeichnet, daß der Wandteil (108) im Querschnitt senkrecht zur Mittelachse des unteren Behälterendes kreisrund ist.

4. Vorrichtung nach einem der vorhergehenden Ansprüche, dadurch gekennzeichnet, daß an der Außenseite des unteren Endes (107) des Behälters (2) und nahe der Auslaßöffnung (114, 115) ein Dosierschieber (135) zum wahlweisen mehr oder weniger weiten Schließen der Auslaßöffnung (114, 115) vorgesehen ist, und daß der Dosierschieber (135) mit einem Stellglied (181) verbunden ist, das entlang eines Führungsgliedes (180) bewegbar und wahlweise in einer von mehreren Positionen entlang des Führungsgliedes feststellbar ist.

5. Vorrichtung nach Anspruch 4, dadurch gekennzeichnet, daß das untere Ende (107) des Behälters zwei Auslaßöffnungen (114, 115, 129, 130) aufweist, die oberhalb des Verteilers (5, 6) angeordnet sind, und daß nahe den Auslaßöffnungen ein Schließglied (142) vorhanden ist, mit dem wahlweise eine der beiden Auslaßöffnungen (114, 115, 129, 130) in der Arbeitslage zum Durchlaß eines größeren oder kleiner Materialstromes aus dem Behälter (2) zum Verteiler zu halten ist, und daß das Schließglied (142) mit einem Stellglied (172) verbunden und wahlweise in einer von mindestens zwei Positionen relativ zum Stellglied (171) des Dosierschiebers (135) feststellbar ist.

6. Vorrichtung nach einem der vorhergehenden Ansprüche, dadurch gekennzeichnet, daß die Vorrichtung mit zwei Verteilern (5, 6) versehen ist, die jeweils unerhalb einer Auslaßmulde (3, 4) des Behälters (2) angeordnet sind, wobei die Auslaßmulden jeweils mindestens zwei Auslaßöffnungen (129, 130, 114, 115) aufweisen, von denen die eine wahlweise verschlossen zu halten ist, während die andere in der Arbeitslage zum Durchlaß von Material zum Verteiler zu halten ist.

7. Vorrichtung nach Anspruch 6, dadurch gekennzeichnet, daß jeder Auslaßmulde (3, 4) ein Dosierschieber (135) zugeordnet ist, mit dem die Auslaßöffnungen (114, 115, 129, 130) wahlweise mehr oder weniger weit zu sperren sind, und daß nahe jeder Auslaßmulde (3, 4) ein Schließglied (142) angeordnet ist, mit dem einer der Auslaßöffnungen in jeder Auslaßmulde (3, 4) verschließbar ist, wobei die Stellglieder (171, 172) der Dosierschieber (135) und die Schließglieder (142) miteinander verbunden sind.

8. Vorrichtung nach einem der vorhergehenden Ansprüche, dadurch gekennzeichnet, daß der Dosierschieber (135) und das Schließglied (142) schalenförmig sind und annähernd den halben Umfang des runden, becherförmigen unteren Endes (107) des Behälters (2) abdecken und an ihm anliegen.

9. Vorrichtung nach Anspruch 7 oder 8, dadurch gekennzeichnet, daß die Dosierschieber (135) und Schließglieder (142) mit Ösen (140, 148) versehen sind, die über Stangen mit Hebeln (171, 172, 176, 177) von zusammengehörigen Rohren (173) und Wellen (174) verbunden sind, an denen das Stellglied (171) und das Stellglied (172) befestigt sind.

10. Vorrichtung nach einem der vorhergehenden Ansprüche, dadurch gekennzeichnet, daß die Vorrichtung mit Befestigungsgliedern (27, 28) versehen ist, mit denen sie an die Hebevorrichtung eines Schleppers oder eines ähnlichen Fahrzeuges anzuschließen ist, und daß die Vorrichtung mit einem Getriebe (40 bis 48) zum Antrieb des oder jedes Verteilers (5, 6) versehen ist, wobei das Getriebe mit der Zapfwelle eines Schleppers oder eines ähnlichen Fahrzeugs zu verbinden ist, an den die Vorrichtung anzuschließen ist.

11. Verfahren zum Ausstreuen von körnigen und/oder pulvrigen Stoffen, mit einer Vorrichtung nach einem der vorhergehenden Ansprüche, dadurch gekennzeichnet, daß das Material mittels mindestens zweier Verteiler (5 und 6) ausgestreut wird, welche das Material jeweils auf denselben Sektor streuen, und daß die Drehgeschwindigkeit der Verteiler (5, 6) variabel ist.

## Revendications

1. Dispositif d'épandage de matière granulaire et/ou en poudre, comprenant une trémie (2), au moins un organe distributeur (5, 6) pouvant tourner autour d'un axe (7, 8), ledit organe distributeur (5, 6) étant disposé sous la trémie (2) dans l'extrémité inférieure (107) de laquelle est prévu au moins un orifice de sortie (114, 115) ayant un bord interne (118, 122) et un bord externe (119, 123) opposé, le bord interne (118, 122) et le bord externe (119, 123) opposé étant situés, par rapport à l'axe (7, 8) sur le même côté de l'extrémité inférieure (107) de la trémie, le bord externe (119, 123) opposée étant situé plus loin dudit axe (7, 8) que le bord interne (118, 122), caractérisé en ce que la partie de l'orifice de sortie s'étendant à partir du bord interne (118, 122) est prévue dans un bord (112) de l'extrémité inférieure de la trémie et en ce que la partie de l'orifice de sortie qui s'étend vere le haut jusqu'au bord externe (119, 123) opposé est prévue dans une partie de paroi (108) de l'extrémité inférieure de la trémie (2), cette partie de paroi (108) s'étendant vers le haut.

2. Dispositif selon la revendication 1, caractérisé en ce que la partie de paroi (108) ayant le bord externe (119, 123) opposé s'élargit vers le haut de telle manière que cette partie de paroi soit inclinée par rapport audit axe (7, 8).

3. Dispositif selon la revendication 1 ou 2, caractérisé en ce que la partie de paroi (108) a une section transversale circulaire, perpendiculaire à l'axe de la partie inférieure de la trémie.

4. Dispositif selon l'une quelconque des revendications précédentes, caractérisé en ce qu'il est prévu, sur le côté externe de l'extrémité inférieure (107) de la trémie (2) et près de l'orifice de sortie (114, 115), un tiroir doseur (135) pour fermer plus ou moins, à volonté, l'orifice de sortie (114, 115) et en ce que le tiroir doseur (135) est accouplé à un organe de réglage (181) mobile le long d'un organe de guidage (180) et peut être fixé à volonté dans l'une quelconque d'une pluralité de positions le long de l'organe de guidage.

5. Dispsitif selon la revendication 4, caractérisé en ce que l'extrémité inférieure (107) de la trémie a deux orifices de sortie (114, 115, 129, 130) situés au dessus de l'organe distributeur (5, 6) et en ce qu'il y a, près des orifices de sortie, un organe obturateur (142) au moyen duquel un des deux orifices de sortie (114, 115, 129, 130) peut être, à volonté, maintenu dans l'état de travail pour laisser passer un débit de matière plus fort ou plus faible à partir de la trémie (2) vers l'organe distributeur, et en ce que l'organe obturateur (142) est accouplé à un organe de réglage (172) et peut être fixé à volonté dans l'une ou l'autre d'au moins deux positions par rapport à l'organe de réglage (171) du tiroir doseur (135).

6. Dispositif selon l'une quelconque des revendications précédentes, caractérisé en ce qu'il comprend deux organes distributeurs (5, 6) disposés chacun sous une goulotte de décharge (3, 4) de la trémie (2), chacune de ces goulottes ayant au moins deux orifices de sortie (129, 130, 114, 115) dont l'un peut être obturé à volonté, tandis que l'autre peut être maintenu en état de travail pour laisser passer de la matière vers l'organe distributeur.

7. Dispositif selon la revendication 6, caractérisé en ce qu'il est adjoint à chaque goulotte de décharge (3, 4) un tiroir doseur (135) respectif, au moyen duquel les orifices de sortie (114, 115, 129, 130) peuvent être, à volonté, plus ou moins obturés, et en ce que, près de chaque goulotte (3, 4) est disposé un organe obturateur (142) au moyen duquel peut être obturé un des orifices de sortie dans chaque goulotte (3, 4), les organes de réglage (171, 172) des tiroirs doseurs (135) et les organes obturateurs (142) étant accouplés entre eux.

8. Dispositif selon l'une quelconque des revendications précédentes, caractérisé en ce que le tiroir doseur (135) et l'organe obturateur (142) sont des organes en forme de cuvettes couvrant, en s'appliquant sur elle, environ la moitié de l'extrémité inférieure (107) de la trémie (2), cette extrémité inférieure (107) étant circulaire et en forme de bol.

9. Dispositif selon la revendication 7 ou 8, caractérisé en ce que les tiroirs doseurs (135) et les organes obturateurs (142) sont munis de languettes (140, 148) reliées par des tringles à des bras de leviers (171, 172, 176, 177) de tubes communs (173) et d'arbres communs (174) auxquels sont fixés l'organe de réglage (171) et l'organe de réglage (172).

10. Dispositif selon l'une quelconque des revendications précédentes, caractérisé en ce qu'il est muni d'organes d'attelage (27, 28) au moyen desquels il peut être attelé au dispositif de levage d'un tracteur ou d'un véhicule analogue, et en ce que le dispositif est muni de moyens de transmission (40 à 48) pour entraîner l'organe distributeur ou chacun des organes distributeurs (5, 6), ces moyens de transmission pouvant être reliés à l'arbre de prise de force d'un tracteur ou d'un véhicule analogue auquel le dispositif peut être attelé.

11. Procédé d'épandage de matière granulaire et/ou en poudre, au moyen d'un dispositif tel que revendiqué dans l'une quelconque des revendications précédentes, caractérisé en ce que la matière est épandue au moyen d'au moins deux organes distributeurs (5, 6) qui épandent chacun la matière sur le même secteur que l'autre organe distributeur, et en ce que la vitesse de rotation des organes distributeurs (5, 6) est variable.

FIG.1

FIG.2

FIG.1

FIG.3

2

FIG.5

FIG.6

FIG.7

FIG.8

FIG.9

FIG.10

FIG.11

FIG.12

FIG.13

FIG. 14

FIG. 15

FIG. 16

FIG. 17